# EUROPÄISCHE PATENTSCHRIFT

(11) **EP 4 071 388 B1**
(45) Veröffentlichungstag und Bekanntmachung des Hinweises auf die Patenterteilung: **25.12.2024**
(21) Anmeldenummer: 21167320.7
(22) Anmeldetag: 08.04.2021
(51) Int. Cl.: F16K 1/52, F16K 31/02, G05D 23/19, F24D 19/10

(54) **REGULIERVENTILANORDNUNG**
CONTROL VALVE ASSEMBLY
AGENCEMENT DE SOUPAPE DE RÉGULATION

(43) Veröffentlichungstag der Anmeldung: 12.10.2022
(73) Patentinhaber: IMI Hydronic Engineering International SA, 1262 Eysins (CH)
(72) Erfinder: Aschenbrenner, Wilhelm, 59609 Anröchte (DE); Perschk, Benjamin, 59555 Lippstadt (DE); Henke, Bernhard, 59929 Brilon (DE)
(74) Vertreter: Zacco Sweden AB

(56) Entgegenhaltungen:
- EP-A1- 2 985 667
- EP-A1- 2 988 071
- DE-A1- 102014 110 550

## Beschreibung

Die Erfindung betrifft eine Regulierventilanordnung für eine Heiz- und/oder Kühlanlage umfassend ein Regulierventil mit einem Zulaufstutzen und umfassend eine an das Regulierventil angebaute Stellantriebseinheit, wobei das Regulierventil einen sich von einer an dem Zulaufstutzen vorgesehenen Zulauföffnung bis zu einer Austrittöffnung erstreckenden Fluidkanal für ein Arbeitsmedium bereitstellt und wobei an dem Fluidkanal eine erste Durchflussöffnung mit einer einstellbaren Größe als eine erste Drosselstelle für das Arbeitsmedium und eine zweite Durchflussöffnung mit einer einstellbaren Größe als eine zweite Drosselstelle für das Arbeitsmedium vorgesehen sind.

Am Markt verfügbare Regulierventilanordnungen mit einem Regulierventil und mit einer dem Regulierventil zur insbesondere elektromotorischen Voreinstellung des Regulierventils zugeordneten Stellantriebseinheit sehen eine einzige Durchflussöffnung voreinstellbarer Größe als Drosselstelle für ein Arbeitsfluid vor. Die Größe der Durchflussöffnung wird dabei beispielsweise über einen Elektromotor der Stellantriebseinheit voreingestellt, der mit einem bevorzugt axial betätigbaren Ventilstift des Regulierventils zusammenwirkt.

Aus der nachveröffentlichten europäischen Patentanmeldung 21 157 236.7 der Anmelderin ist überdies ein Regulierventil mit zwei Drosselstellen voreinstellbarer Größe bekannt, die insbesondere der getrennten Vorgabe beziehungsweise Einstellung eines Temperatursollwerts einerseits und eines Betriebszustandswerts des Regulierventils andererseits dienen. Beispielsweise kann vorgesehen sein, dass eine erste Drosselstelle der Voreinstellung des Temperatursollwerts dient und dass über eine zweite Drosselstelle die Heiz- beziehungsweise Kühlanlage insgesamt oder ein Teilkreislauf derselben zeitgesteuert ein- und ausgeschaltet wird, indem der Durchfluss durch die zweite Drosselstelle wahlweise freigegeben oder gesperrt wird. Eine Stellantriebseinheit für ein Regulierventil mit zwei voreinstellbaren Drosselstellen ist nicht bekannt.

Die Dokumente EP 2 988 071 A1 und EP 2 985 667 A1 offenbaren jeweils eine Regulierventilanordnung für eine Heiz- und/oder Kühlanlage umfassend ein Regulierventil mit einem Zulaufstutzen, wobei das Regulierventil einen sich von einer an dem Zulaufstutzen vorgesehenen Zulauföffnung bis zu einer Austrittöffnung erstreckenden Fluidkanal für ein Arbeitsmedium bereitstellt und wobei an dem Fluidkanal eine erste Durchflussöffnung mit einer einstellbaren Größe als eine erste Drosselstelle für das Arbeitsmedium und eine zweite Durchflussöffnung mit einer einstellbaren Größe als eine zweite Drosselstelle für das Arbeitsmedium vorgesehen sind.

Aufgabe der vorliegenden Erfindung ist es, eine verbesserte Stellantriebseinheit für ein Regulierventil mit zwei voreinstellbaren Drosselstellen sowie eine Regulierventilanordnung mit der verbesserten Stellantriebseinheit anzugeben.

Zur Lösung der Aufgabe ist eine Regulierventilanordnung gemäß Anspruch 1 vorgeschlagen. Diese Regulierventilanordnung ist dadurch gekennzeichnet, dass die Stellantriebseinheit als eine doppelwirkende Stellantriebseinheit ausgebildet ist und ein gemeinsames Antriebsgehäuse sowie einen in dem gemeinsamen Antriebsgehäuse angeordneten ersten Aktuator und einen in dem gemeinsamen Antriebsgehäuse angeordneten zweiten Aktuator vorsieht, wobei der erste Aktuator mit dem Regulierventil wirkverbunden ist zur Einstellung der Größe der ersten Durchflussöffnung und wobei der zweite Aktuator mit dem Regulierventil wirkverbunden ist zur Einstellung der Größe der zweiten Durchflussöffnung.

Der besondere Vorteil der Erfindung besteht darin, dass durch das Vorsehen einer einzigen, jedoch doppelwirkenden Stellantriebseinheit mit einem einzigen, gemeinsamen Antriebsgehäuse eine sehr kompakte Bauform bewirkt wird. Der Bauraumbedarf ist insofern deutlich geringer als beim Vorsehen von zwei getrennten Stellantriebseinheiten für die erste Drosselstelle einerseits und die zweite Drosselstelle andererseits. Darüber hinaus reduziert sich der Montageaufwand durch das Vorsehen der einen doppelwirkenden Stellantriebseinheit, da diese in einem einzigen Montageschritt an das Regulierventil angebaut werden kann und dann über die zwei Aktuatoren eine Größe der Durchflussöffnungen der Drosselstellen getrennt und automatisiert eingestellt werden kann.

Nach einer bevorzugten Ausführungsform der Erfindung umfasst das Regulierventil ein Betätigungsmodul, wobei das Betätigungsmodul einen in eine Längsbetätigungsrichtung verschiebbaren Ventilstift und einen an einem Zulauföffnung zugewandten Ende des Ventilstifts gehaltenen Teller sowie eine an dem Teller angeordnete Dichtung vorsieht und in Abhängigkeit einer Längsposition des Ventilstifts die Größe der zweiten Durchflussöffnung bestimmt ist. Vorteilhaft kann durch das Vorsehen des Betätigungsmoduls der Durchfluss durch den Fluidkanal beziehungsweise das Regulierventil in einfache Weise gesperrt oder freigegeben werden. Die zweite Drosselstelle wird hierzu wahlweise vollständig geöffnet oder geschlossen.

Nach einer Weiterbildung der Erfindung ist der erste Aktuator über einen Wandler mit einer bevorzugt rotatorisch betätigbaren Handhabe des Regulierventils wirkverbunden zur Änderung der Voreinstellung der Größe der ersten Durchflussöffnung. Bevorzugt ist der erste Aktuator als ein rotatorisch wirksamer Antrieb. Besonders bevorzugt als ein Elektromotor mit einer Antriebswelle als erster Aktuator vorgesehen. Die Antriebswelle des Elektromotors ist beispielsweise parallel zu dem Ventilstift des Betätigungsmoduls beziehungsweise in die Längsbetätigungsrichtung orientiert angeordnet. Vorteilhaft können hierdurch eine ebenfalls rotatorisch betätigbare Handhabe in besonders einfacher Weise elektromotorisch betätigt und die Größe der ersten Durchflussöffnung feinfühlig eingestellt werden.

Nach einer Weiterbildung der Erfindung betätigt zur Realisierung einer ausreichend feinfühligen Verstellung der Handhabe der erste Aktuator die Handhabe über einen Wandler. Als Wandler kann beispielsweise ein Zahnradgetriebe vorgesehen sein oder der Wandler kann ein solches umfassen. Insbesondere kann das Zahnradgetriebe ein an der Antriebswelle des Elektromotors festgelegtes Ritzel sowie ein drehfest mit der Handhabe verbundenes, die Handhabe umgreifendes Zahnrad vorsehen. Nach einer Weiterbildung der Erfindung sieht das Regulierventil ein Mengenreguliermodul vor, wobei das Mengenreguliermodul ein Reguliergehäuse und einen in dem Reguliergehäuse beweglich angeordneten Reguliereinsatz sowie die Handhabe umfasst und wobei die Handhabe mit dem Reguliereinsatz des Mengenreguliermoduls zusammenwirkt zur Änderung und/oder Voreinstellung der Größe der ersten Durchflussöffnung in Abhängigkeit einer Position des Reguliereinsatzes relativ zu dem Reguliergehäuse.

Nach einer Weiterbildung der Erfindung ist das gemeinsame Antriebsgehäuse der Stellantriebseinheit mehrteilig ausgebildet. Es sieht insbesondere eine Bechergehäusekomponente vor, die die beiden Aktuatoren der doppelwirkenden Stellantriebseinheit umgreift und an einer dem Regulierventil zugewandten Seite eine Öffnung vorsieht. In die Öffnung der Bechergehäusekomponente ist dann beispielsweise eine Gehäuseplatte eingesetzt, welche Ausnehmungen vorsieht, um die Aktuatoren mit der Handhabe und dem Ventilstift wirkzuverbinden. Vorteilhaft können die Aktuatoren sehr einfach in das mehrteilige Antriebsgehäuse eingebaut werden. Die Bechergehäusekomponente schützt die Aktuatoren dabei wirkungsvoll vor äußeren Einflüssen.

Nach einer Weiterbildung der Erfindung ist ein Linearantrieb und bevorzugt ein Lineardirektantrieb als zweiter Aktuator vorgesehen. Der Linearantrieb kann vorteilhaft zur Betätigung des längsverschiebbaren Ventilstifts genutzt werden.

Nach einer Weiterbildung der Erfindung wird als zweiter Aktuator ein elektrothermisches Betätigungselement verwendet. Das elektrothermische Betätigungselement kann als Lineardirektantrieb einen mit dem Ventilstift zusammenwirkenden Stößel als längsbewegbares Übertragungselement vorsehen.

Nach einer Weiterbildung der Erfindung ist das Übertragungselement des zweiten Aktuators in die Längsbetätigungsrichtung längsbeweglich. Vorteilhaft vereinfacht sich hierdurch die Herstellung der Wirkverbindung zwischen dem Ventilstift und dem zweiten Aktuator. Beispielsweise kann der zweite Aktuator dem Ventilstift koaxial zugeordnet sein. Zur Anpassung des Hubs kann das Übertragungselement des zweiten Aktuators über einen Wandler mit dem Ventilstift des Regulierventils zusammenwirken.

Nach einer Weiterbildung der Erfindung ist an dem Regulierventil eine dritte Durchflussöffnung variabler Größe als dritte Drosselstelle gebildet. Die in ihrer Größe variable dritte Durchflussöffnung dient der selbsttätigen Anpassung des Durchflusses an schwankende Druckverhältnisse. Druckschwankungen können beispielsweise aus dem Betrieb einer Umwälzpumpe für das Arbeitsmedium resultieren oder durch andere Eingriffe in die Heiz- beziehungsweise Kühlanlage wie beispielweise eine Änderung der Voreinstellung oder das Öffnen beziehungsweise Schließen von Teilkreisläufen verursacht werden. Die Druckschwankungen können übe die dritte Drosselstelle bevorzugt selbstregulierend ausgeglichen werden, ohne dass die Voreinstellungen für die erste und/oder zweite Drosselstelle angepasst werden müssen.

Zur Bildung der dritten Drosselstelle sieht das Mengenreguliermodul beispielsweise den längsverschiebbaren Reguliereinsatz und einen über eine Regulierfeder des Mengenreguliermoduls gegen den Reguliereinsatz abgestützten und relativ zu dem Reguliereinsatz längsverschiebbaren Reguliertopf mit einem der Zulauföffnung zugewandten, geschlossenen Topfboden und einem von dem Topfboden abragenden Topfrand vor. Die dritte Drosselstelle ist bezogen auf eine Durchflussrichtung des Arbeitsmediums bevorzugt vor oder zwischen der ersten Drosselstelle und vor der zweiten Drosselstelle vorgesehen. Insbesondere ist sie zwischen dem Topfrand einerseits um dem Reguliereinsatz beziehungsweise dem Reguliergehäuse des Mengenreguliermoduls anderseits gebildet.

Nach einer Weiterbildung der Erfindung sieht der Reguliereinsatz eine Mehrzahl von über Stege gehaltenen Gewinderingsegmente vor, wobei die Gewinderingsegmente ein in ein korrespondierend geformtes Innengewinde des Mengenreguliermoduls eingreifendes Außengewinde vorsehen und wobei zwischen benachbarten Stegen und/oder benachbarten Gewinderingsegmenten des Reguliereinsatzes Eingriffsausnehmungen vorgesehen sind.

Nach einer Weiterbildung der Erfindung sieht das Mengenreguliermodul einen an dem Reguliergehäuse abgestützten Betätigungsring mit hiervon abragenden Betätigungsfingern vor, wobei der Betätigungsring mit der Handhabe wirkverbunden ist und die Betätigungsfinger in die Eingriffsausnehmungen eingreifen zur Übertragung einer Betätigung der Handhabe auf den Reguliereinsatz.

Nach einer Weiterbildung der Erfindung ist das Reguliergehäuse des Mengenreguliermoduls mehrteilig ausgebildet. Es sieht eine äußere Modulgehäusehülse und einen Gehäuseeinsatz vor, wobei die Modulgehäusehülse den Gehäuseeinsatz jedenfalls abschnittsweise mantelseitig umgreift.

Nach einer Weiterbildung der Erfindung stellt der Gehäuseeinsatz des Reguliergehäuses das Innengewinde des Mengenreguliermoduls und/oder die Innenmantelfläche bereit.

Nach einer Weiterbildung der Erfindung ist der Reguliereinsatz des Mengenreguliermoduls rotatorisch verstellbar zur Einstellung der Größe der ersten Drosselstelle. Beispielsweise kann der Reguliereinsatz eine Steuerkante vorsehen, welche abhängig von der Drehstellung des Reguliereinsatzes eine Durchflussöffnung teilweise oder vollständig freigibt. Der Reguliereinsatz kann insbesondere koaxial zur Längsmittelachse vorgesehen und um diese drehbar angeordnet sein. Vorteilhaft kann eine Drehbewegung der Handhabe in besonders einfacher Weise auf einen drehbar angeordneten Reguliereinsatz übertragen werden. Eine Wandlung einer Rotationsbewegung der Handhabe in eine Längsbewegung des Reguliereinsatzes kann insofern entfallen.

Gemäß einer Weiterbildung umfasst die Regulierventilanordnung Anbaumittel, welche eingerichtet sind zum Anbau der Stellantriebseinheit an das Regulierventil der Regulierventilanordnung.

Der besondere Vorteil der Erfindung besteht darin, dass durch das Vorsehen der Stellantriebseinheit mit dem gemeinsamen Antriebsgehäuse für die zwei Aktuatoren eine einzige einfach zu installierende Baueinheit bereitgestellt wird, welche an vorhandene oder neu eingebaute Regulierventile in besonders einfacher Weise angebaut werden kann. Insbesondere kann vorgesehen sein, dass die Stellantriebseinheit nachträglich an bereits vorher installierte Regulierventile angebaut wird, um so eine Heiz- beziehungsweise Kühlanlage nachträglich zu automatisieren. Die Stellantriebseinheit kann werksseitig montiert und dann vor Ort auf der Baustelle an das bereits installierte Regulierventil angebaut werden.

Als Anbaumittel kann beispielsweise ein Verschraubungsring vorgesehen werden, welcher mit einem Betätigungsgehäuse des Betätigungsmoduls des Regulierventils verbunden wird. Beispielsweise kann der Verschraubungsring ein Innengewinde und das Betätigungsgehäuse ein korrespondierend geformtes Außengewinde vorsehen. Aus den weiteren Unteransprüchen und der nachfolgenden Beschreibung sind weitere Vorteile, Merkmale und Einzelheiten der Erfindung zu entnehmen. Die Zeichnungen dienen lediglich beispielhaft der Klarstellung der Erfindung. Sie haben keinen einschränkenden Charakter.

Es zeigen:
- Fig. 1: einen Längsschnitt durch ein erstes Ausführungsbeispiel einer erfindungsgemäßen Regulierventilanordnung mit einem Regulierventil und einer an das Regulierventil angebauten doppelwirkenden Stellantriebseinheit sowie einem Installationsgehäuse für das Regulierventil,
- Fig. 2: eine vergrößerte Widergabe des Regulierventils der Regulierventilanordnung nach Fig. 1 mit dem Installationsgehäuse,
- Fig. 3: eine perspektivische Schnittdarstellung der Regulierventilanordnung nach Fig. 1,
- Fig. 4: einen Längsschnitt durch ein zweites Ausführungsbeispiel der erfindungsgemäßen Regulierventilanordnung mit einem modifizierten Regulierventil und der an das Regulierventil angebauten doppelwirkenden Stellantriebseinheit und
- Fig. 5: einen Längsschnitt durch ein drittes Ausführungsbeispiel der erfindungsgemäßen Regulierventilanordnung mit einem nochmals modifizierten Regulierventil und der an das Regulierventil angebauten doppelwirkenden Stellantriebseinheit.

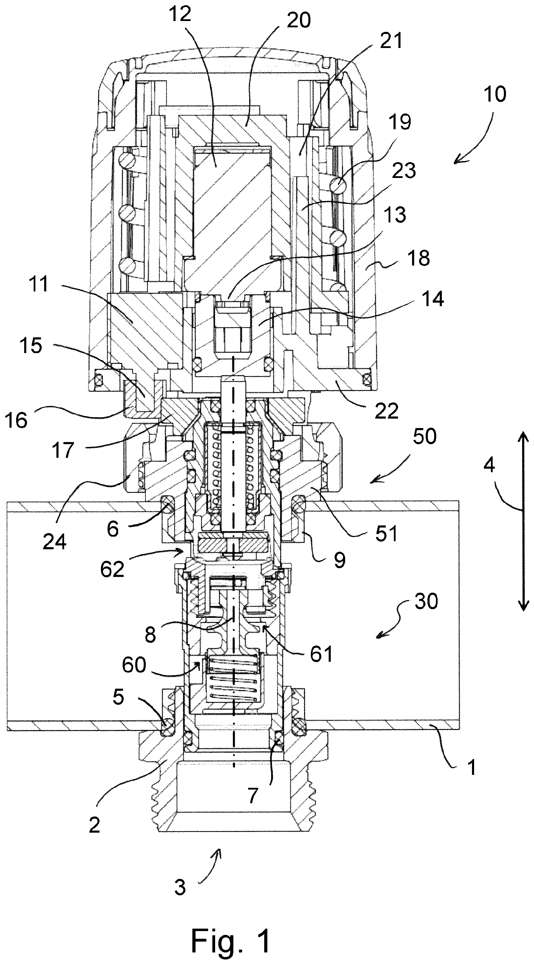

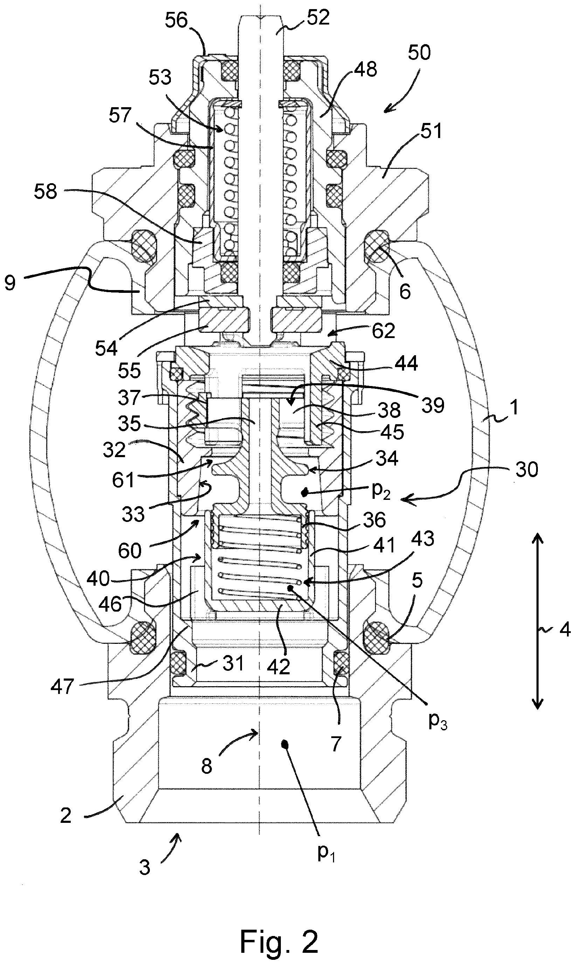

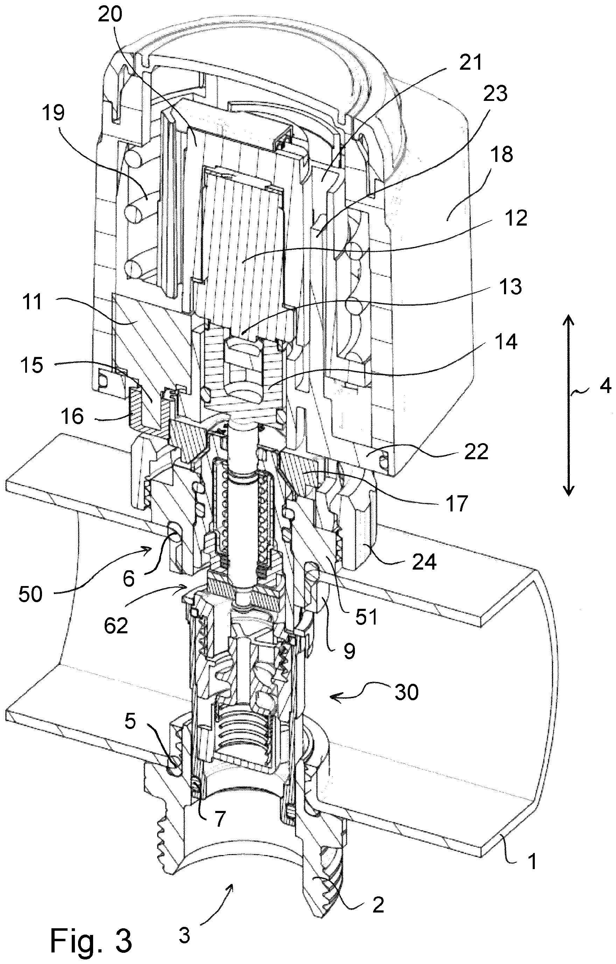

Ein erstes Ausführungsbeispiel einer erfindungsgemäßen Regulierventilanordnung nach den Fig. 1 bis 3 umfasst ein Regulierventil mit einem Zulaufstutzen 2, mit einem Mengenreguliermodul 30 und mit einem Betätigungsmodul 50 sowie eine an das Regulierventil angebaute Stellantriebseinheit 10. Der Zulaufstutzen 2, der eine Zulauföffnung 3 für das Arbeitsmedium bereitstellt, ist über eine Dichtung 5 gegen ein Installationsgehäuse 1 gedichtet. Ein Betätigungsgehäuse 51 des Betätigungsmoduls 50, welches durch einen Voreinstellstutzen 9 des Installationsgehäuses 1 in das Installationsgehäuse hineinragt, ist über eine Dichtung 6 gegen das Installationsgehäuse 1 gedichtet. Eine weitere Dichtung 7 ist zwischen dem Zulaufstutzen 2 und dem Mengenreguliermodul 30 des Regulierventils vorgesehen.

Das Betätigungsmodul 50 umfasst das Betätigungsgehäuse 51. Es sieht einen gegen eine Druckfeder 53 längsverschiebbar zu dem Betätigungsgehäuse 51 angeordneten Ventilstift 52, einen an einem dem Mengenreguliermodul 30 zugewandten Ende des Ventilstifts 52 gehaltenen Teller 54 sowie eine an dem Teller 54 gehaltene Dichtung 55 vor. Die Feder 53 ist in einer Hülse 57 angeordnet, durch die der Ventilstift 52 stirnseitig hindurchgeführt ist.

Die Hülse 57 wird von einer Handhabe 48 des Mengenreguliermoduls 30 umgriffen. Die Handhabe 48 ist drehbar um eine Längsmittelachse 8 in dem Betätigungsgehäuse 51 des Betätigungsmoduls 50 vorgesehen. Der Ventilstift 52 und die Handhabe 48 greifen durch den Voreinstellstutzen 9 in das Installationsgehäuse 1 ein.

Über einen Führungsring 58 sind der Stift 52 sowie die Hülse 57 mit der Druckfeder 53 an der Handhabe 48 gehalten. Eine Kappe 56 umgreift die Handhabe 48 an einem dem Teller 54 sowie der Dichtung 55 abgewandten Ende des Betätigungsmoduls 50.

Die Kappe 56 sieht dabei stirnseitig eine Ausnehmung vor, durch die hindurch der Ventilstift 52 hindurchgeführt ist.

Mittels der Stellantriebseinheit 10 kann eine Längsposition des Ventilstifts 52 beeinflusst werden. Der Ventilstift 52 wird dabei gegen die Druckfeder 53 bewegt, welche als Zylinderfeder gegen die Hülse 57 einerseits und über einen Sprengring gegen den Ventilstift 52 andererseits verspannt ist.

Das mit dem Betätigungsmodul 50 gekoppelte Mengenreguliermodul 30 sieht ein mehrteiliges Reguliergehäuse mit einer äußeren Modulgehäusehülse 31 und einem ringförmigen beziehungsweise hohlzylindrischen Gehäuseeinsatz 32 vor, welcher von der Modulgehäusehülse 31 mantelseitig umgriffen ist. Darüber hinaus ist ein Reguliereinsatz 34 vorgesehen, welcher von der Modulgehäusehülse 31 umgriffen wird und abschnittsweise in den Gehäuseeinsatz 32 hineinragt.

Der Reguliereinsatz 34 sieht an einem dem Betätigungsmodul 50 abgewandten Ende eine Topfführung 36 vor, über die ein Reguliertopf 40 des Mengenreguliermoduls 30 längsverschiebbar an dem Reguliereinsatz 34 abgestützt ist. Der Reguliertopf 40 sieht einen der Zulauföffnung 3 zugewandten Topfboden 42 sowie einen hiervon in Richtung des Reguliereinsatzes 34 beziehungsweise des Betätigungsmoduls 50 abragenden Topfrand 41 vor. In dem Reguliertopf 40 ist eine Regulierfeder 43 vorgesehen, über die der Reguliertopf 40 gegen den Reguliereinsatz 34 abgestützt ist.

Der Reguliereinsatz 34 sieht eine Mehrzahl von in einer Umfangsrichtung verteilt angeordneten Gewinderingsegmenten 37 vor, welche über Stege 38 gehalten sind. Zwischen benachbarten Stegen 38 beziehungsweise benachbarten Gewinderingsegmenten 37 des Reguliereinsatzes 34 sind Eingriffsausnehmungen 39 gebildet. Die Gewinderingsegmente 37 sehen ein Außengewinde vor, welches in ein korrespondierend geformtes Innengewinde des Mengenreguliermoduls 30 eingreift. Das Innengewinde ist dabei im vorliegenden Ausführungsbeispiel der Erfindung an dem Gehäuseeinsatz 32 des Reguliergehäuses vorgesehen.

Die Modulgehäusehülse 31, der Gehäuseeinsatz 32, der Reguliereinsatz 34, der Reguliertopf 40, die Regulierfeder 43 sowie die Handhabe 48 des Mengenreguliermoduls 30 und der Ventilstift 52, die Druckfeder 53, der Teller 54, die Dichtung 55, die Hülse 57 sowie der Führungsring 58 des Betätigungsmoduls 50 sind koaxial zu der Längsmittelachse 8 angeordnet.

Das Mengenreguliermodul 30 sieht darüber hinaus einen Betätigungsring 44 vor, welcher ebenfalls koaxial zu der Längsmittelachse 8 angeordnet und der Dichtung 55 des Betätigungsmoduls 50 zugewandt ist. Von dem Betätigungsring 44 ragen in Richtung des Reguliereinsatzes 34 Betätigungsfinger 45 ab. Die Betätigungsfinger 45 greifen in die an dem Reguliereinsatz 34 gebildeten Eingriffsausnehmungen 39 ein. Der Betätigungsring 44 ist wirkverbunden mit der Handhabe 48. Eine Drehbewegung der Handhabe 48 wird insofern über den Betätigungsring 44 und die Betätigungsfinger 45 auf den Reguliereinsatz 34 übertragen. Infolge des Gewindes wird die Rotation der Handhabe 48 in eine Längsverschiebung des Reguliereinsatzes 34 in eine in die Richtung der Längsmittelachse 8 erstreckte Längsbetätigungsrichtung 4 umgesetzt. Die Handhabe 48 ist insofern funktional ein Teil des Mengenreguliermoduls 30 und räumlich in das Betätigungsmodul 50 integriert.

An einem der Zulauföffnung 3 zugewandten Ende ist an dem Reguliertopf 40 eine Mehrzahl von nach außen abragenden Anschlägen 46 gebildet. Die Anschläge 46 sind so gestaltet, dass sie in einer ersten Regulierstellung des Mengenreguliermoduls 30, in der sich der Reguliertopf 40 in einer ersten Endstellung befindet, gegen eine an der Modulgehäusehülse 31 innenliegend gebildete Stufe 47 angelegt sind. Der an der Modulgehäusehülse 31 gebildeten Stufe 47 gegenüberliegend ist der Gehäuseeinsatz 32 vorgesehen. Der Gehäuseeinsatz 32 bildet zusammen mit der Modulgehäusehülse 31 eine weitere Stufe, gegen die der Reguliertopf 40 mit den Anschlägen 46 in einer zweiten Endstellung desselben angelegt ist.

Die Zuordnung des Mengenreguliermoduls 30 zu dem Betätigungsmoduls 50 erfolgt so, dass zwischen den Modulen 30, 50 durch die Dichtung 55 des Betätigungsmoduls 50 und dem als Ventilsitz dienenden Betätigungsring 44 des Mengenreguliermoduls 30 eine Austrittsöffnung für das Arbeitsmedium gebildet ist, welches über die Zulauföffnung 3 einströmt und im Weiteren einen Fluidkanal des Mengenreguliermoduls 30 durchströmt. Der Fluidkanal des Mengenreguliermoduls 30 sieht als eine erste Drosselstelle 61 eine erste Durchflussöffnung, eine als eine zweite Drosselstelle 62 dienende zweite Durchflussöffnung und eine als eine dritte Drosselstelle 60 dienende dritte Durchflussöffnung vor. Die zweite Drosselstelle 62 ist bezogen auf eine Durchflussrichtung des Arbeitsmediums hinter der ersten Drosselstelle 61 angeordnet. Die dritte Drosselstelle 60 ist bezogen auf die Durchflussrichtung des Arbeitsmediums vor der ersten Drosselstelle 61 und der zweiten Drosselstelle 62 angeordnet.

Die erste Durchflussöffnung (erste Drosselstelle 61) ist zwischen dem Reguliereinsatz 34 und dem Gehäuseeinsatz 32 gebildet und im Wesentlichen axial erstreckt. Der Reguliereinsatz 34 ist hierzu abschnittsweise kegelförmig ausgeformt. Eine Größe der zwischen der kegelförmigen Ausformung des Reguliereinsatzes 34 und dem Gehäuseeinsatz 32 des Reguliergehäuses gebildeten ersten Durchflussöffnung (erste Drosselstelle 61) kann durch die Längsstellung des Reguliereinsatzes 34 und insofern über die Drehstellung der Handhabe 48 voreingestellt beziehungsweise verändert werden. Insofern ist es möglich, über die Drehstellung der Handhabe 48 einen Grunddurchfluss durch das Mengenreguliermodul 30 zu definieren und über den Grunddurchfluss insbesondere einen Temperatursollwert vorzugeben.

Die zweite Drosselstelle 62 definiert zugleich als Austrittsöffnung für das Arbeitsmedium aus dem Regulierventil beziehungsweise dem hierin gebildeten Fluidkanal. Die zweite Drosselstelle 62 ist zwischen der Dichtung 55 des Betätigungsmoduls 50 und dem Betätigungsring 44 des Mengenreguliermoduls 30 gebildet. Eine Relativposition der Dichtung 55 zu dem Betätigungsring 44 und damit eine Größe der zweiten Durchflussöffnung ist durch die Längsposition des Ventilstifts 52 definiert.

Die dritte Drosselstelle 60 ist koaxial zu der Längsmittelachse 8 und koaxial zu der ersten Durchflussöffnung der ersten Drosselstelle 61 und der zweiten Durchflussöffnung der zweiten Drosselstelle 62 vorgesehen. Die dritte Drosselstelle 60 ist gebildet zwischen einer zylindrischen Außenmantelfläche des Reguliertopfs 40 im Bereich des Topfrands 41 einerseits und einer Innenmantelfläche 33, die dem Topfrand 41 mit seiner Außenmantelfläche zugewandt ist und an dem Gehäuseeinsatz 32 gebildet wird, und im Wesentlichen radial erstreckt. Die Innenmantelfläche 33 verjüngt sich dabei in die Durchflussrichtung des Arbeitsmediums konisch mit der Folge, dass durch eine Verschiebung des Reguliertopfs in die Längsbetätigungsrichtung 4 eine Größe beziehungsweise ein Öffnungsmaß der dritten Durchflussöffnung (dritte Drosselstelle 60) variiert.

Um Druckschwankungen des Arbeitsmediums in einer an dem Zulaufstutzen 2 angeschlossenen Zulaufleitung auszugleichen, stellt sich die Größe der dritten Drosselstelle 60 druckabhängig ein. Insofern sieht der Reguliereinsatz 34 eine Durchgangsbohrung 35 vor, welche von einem hinter der ersten Drosselstelle 61 gebildeten Fluidraum bis ins Innere des Reguliertopfs 40 geführt ist. Gelangt nun das Arbeitsmedium mit einem Druck p₁ in den Zulaufstutzen 2, kommt es beim Durchströmen der dritten Drosselstelle 60 zu einem Druckabfall mit der Folge, dass sich hinter der dritten Drosselstelle 60 ein Druck p₂ für das Arbeitsmedium einstellt. Der Druck wird beim Durchströmen der ersten Drosselstelle 61 abermals reduziert mit der Folge, dass in dem Fluidraum und damit auch im Inneren des Reguliertopfs 40 das Arbeitsmedium den nochmals reduzierten Druck p₃ aufweist. Infolge der Druckdifferenz der auf den gegenüberliegenden Seiten des Topfbodens 42 herrschenden Drücke p₁, p₃ und unter Berücksichtigung einer Federkonstanten der Regulierfeder 43 stellt sich nun die Relativposition des Reguliertopfs 40 zum Reguliereinsatz 34 druckbeziehungsweise durchflussabhängig selbsttätig ein.

Während eine Größe der dritten Drosselstelle 60 sich druck- beziehungsweise durchflussabhängig selbst einstellt und die über die Anschläge 46 definierten Endstellungen des Reguliertopfs 40 eine maximale und eine minimale Größe der dritte Durchflussöffnung (dritte Drosselstelle 60) definieren, sind die Größe der ersten Durchflussöffnung (erste Drosselstelle 61) und die Größe der zweiten Durchflussöffnung (zweite Drosselstelle 62) voreinstellbar. Der Voreinstellung der Größen dient die Stellantriebseinheit 10. Sie sieht einen Elektromotor 11 als einen ersten Aktuator sowie ein elektrothermisches Betätigungselement 12 als einen zweiten Aktuator vor.

Der Elektromotor 11 besitzt eine Antriebswelle 15, die in die Längsbetätigungsrichtung 4 des Regulierventils längsersteckt ist und an einem freien Ende ein Ritzel 16 trägt. Das Ritzel 16 greift in ein Zahnrad 17 ein, welches als Zahnkranz gebildet ist und die Handhabe 48 des Mengenreguliermoduls 30 umgreift. Das Zahnrad 17 ist drehfest mit der Handhabe 48 verbunden, sodass eine Antriebsbewegung des Elektromotors 11 über die Welle 15, das Ritzel 16 und das Zahnrad 17 auf die Handhabe 48 übertragen wird. Über die Handhabe 48 wird dann wie beschrieben der Reguliereinsatz 34 des Mengenreguliermoduls 30 in die Längsbetätigungsrichtung 4 längsverschoben und so die Größe der ersten Durchflussöffnung 61 voreingestellt. Der Elektromotor 11 kann in zwei Drehrichtungen betätigt werden zum Öffnen und Schließen des Regulierventils.

Das elektrothermische Betätigungselement 12 als zweiter Aktuator sieht einen Stößel als Übertragungselement 13 vor. Das Übertragungselement 13 wird, wenn sich das elektrothermische Betätigungselement 12 infolge eines Stromdurchflusses erwärmt, in die Längsbetätigungsrichtung 4 verschoben. Eine Stellbewegung des Übertragungselements 13 wird dabei über die Hülse 14 auf den Ventilstift 52 übertragen. Der Ventilstift 52 definiert dabei über seine Längsposition die Größe der zweiten Durchflussöffnung 62. Insbesondere kann über das elektrothermische Betätigungselement 12 die Dichtung 55 gegen den Betätigungsring 44 angedrückt werden mit der Folge, dass die zweite Durchflussöffnung 62 vollständig verschlossen ist und kein Arbeitsmedium das Regulierventil durchströmt.

Die Aktuatoren 11, 12 der Stellantriebseinheit 10 sind in einem gemeinsamen Antriebsgehäuse verbaut. Das Antriebsgehäuse ist mehrteilig realisiert. Es umfasst eine Bechergehäusekomponente 18 mit einer dem Regulierventil zugewandten Öffnung und eine Gehäuseplatte 22, welche in die Öffnung der Bechergehäusekomponente 18 eingesetzt ist und Ausnehmungen für die Antriebswelle 15 sowie den Ventilstift 52 vorsieht.

Die Festlegung des Elektromotos 11 und des elektrothermischen Betätigungselements 12 in dem Antriebsgehäuse erfolgt über eine Aufnahme 20, welche gegen die Gehäuseplatte 22 angelegt ist und über eine Andrückfeder 19 gegen die Bechergehäusekomponenten 18 des Antriebsgehäuses verspannt wird. Die Andrückfeder 19 ist als Zylinderfeder realisiert und wirkt in die Längsbetätigungsrichtung 4.

Die Aufnahme 20 sieht überdies eine Ausnehmung 21 vor, in die ein an der Gehäuseplatte 22 gebildeter Stift 23 eingreift. Durch den in die Ausnehmung 21 eingreifenden Stift 23 ist eine Lagezuordnung der Aufnahme 20 zu der Gehäuseplatte 22 realisiert. Überdies ist die Aufnahme 20 der Gehäuseplatte 22 drehfest zugeordnet.

Zum Festlegen der Stellantriebseinheit 10 an dem Regulierventil dient ein Verschraubungsring 24 der Stellantriebseinheit 10. Der Verschraubungsring 24 sieht ein Innengewinde vor, welches an ein korrespondierend gestaltetes Außengewinde des Betätigungsgehäuse 51 des Betätigungsmoduls 50 angeschraubt ist.

Die erfindungsgemäße Stellantriebseinheit 10 mit den zwei Aktuatoren 11, 12 ist erfindungsgemäß als doppelwirkende Stellantriebseinheit 10 mit dem gemeinsamen, einzigen Antriebsgehäuse realisiert. Die Stellantriebseinheit 10 ist über den Verschraubungsring 24 als einziges Anbaumittel an das Regulierventil angebaut und relativ zu diesem positioniert und festgelegt. Die Wirkverbindungen von Elektromotor 11 und Handhabe 48 einerseits sowie elektrothermischen Betätigungselement 12 und Ventilstift 52 anderseits sind unmittelbar durch die Verschraubung hergestellt.

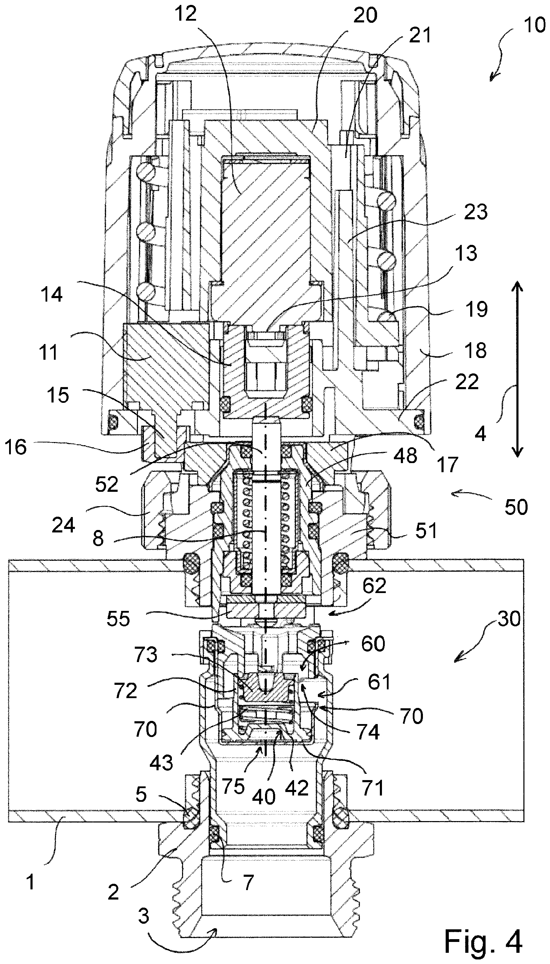

Figur 4 zeigt ein zweites Ausführungsbeispiel einer erfindungsgemäßen Regulierventilanordnung. Die Regulierventilanordnung verwendet die gleiche, bereits beschriebene doppelwirkende Stellantriebseinheit 10 sowie das gleiche Betätigungsmodul 50 mit dem in die Längsbetätigungsrichtung 4 verschiebbaren Ventilstift 52. Unterschiedlich ist demgegenüber die Realisierung des Mengenreguliermoduls 30.

Das Mengenreguliermodul 30 sieht eine Mengenregulierhülse 31 als einzige Gehäusekomponente des Reguliergehäuses, einen in der Mengenregulierhülse 31 eingesetzten Durchflusstopf 70 und den Reguliereinsatz 34 vor. Der Durchflusstopf 70 sieht einen der Zulauföffnung 3 zugewandten Boden 71 mit einer Ausnehmung 75 und einen Mantel 72 vor, der von dem Boden 71 in Richtung des Betätigungsmoduls 50 abragt. Der Durchflusstopf 70 ist koaxial zu der Längsmittelachse 8 angeordnet. Der Mantel 72 des Durchflusstops 70 ist jedenfalls abschnittsweise parallel und beabstandet zu der Modulgehäusehülse 31 vorgesehen.

Der Reguliereinsatz 34 greift auf einer dem Boden 71 gegenüberliegenden Seite des Durchflusstopfs 70 in ebendiesen ein. An dem Reguliereinsatz 34 ist koaxial zur Längsmittelachse 8 auf einer dem Betätigungsmodul 50 abgewandten Seite ein Stützkörper 73 angelegt. Der Stützkörper 73 dient der Führung eines Reguliertopfs 40 des Mengenreguliermoduls 30 in die Längsbetätigungsrichtung 4. Der Reguliertopf 40 ist über eine Regulierfeder 43 gegen den Stützkörper 73 abgestützt und relativ zu dem Durchflusstopf 70 und dem Reguliereinsatz 34 mit dem daran angelegten Stützkörper 73 in die Längsbetätigungsrichtung 4 verschiebbar.

Wie gehabt sieht das Regulierventil eine erste Drosselstelle 61, eine zweite Drosselstelle 62 sowie eine dritte Drosselstelle 60 vor. Die erste Drosselstelle 61 und die zweite Drosselstelle 62 sind als voreinstellbare Drosselstellen realisiert. Eine Größe einer Durchflussöffnung dieser Drosselstellen 61, 62 kann über die Stellantriebseinheit 10 voreingestellt beziehungsweise verändert werden. Die dritte Drosselstelle 60 dient wie gehabt dem dynamischen Druckausgleich. Eine Größe einer der dritten Drosselstelle 60 zugeordneten dritten Durchflussöffnung stellt sich abhängig von den Druckverhältnissen selbsttätig ein.

Die erste Drosselstelle 61 ist in Bezug auf ihre Größe über den Elektromotor 11 der Stellantriebseinheit 10 einstellbar. Sie ist zwischen dem Durchflusstopf 70 beziehungsweise einer an dem Mantel 72 des Durchflusstopfs 70 vorgesehenen Durchflussöffnung einerseits und dem Reguliereinsatz 34 andererseits gebildet. Der Reguliereinsatz 34 ist vorliegend um die Längsmittelachse 8 rotierbar. Abhängig von einer Drehstellung des Reguliereinsatzes 34 verschließt eine an den Reguliereinsatz 34 gebildete Steuerkante 74 die Durchflussöffnung im Mantel 72 des Durchflusstopfes 70 mehr oder weniger mit der Folge, dass der Durchfluss durch die erste Drosselstelle 61 variiert. Die Voreinstellung erfolgt über die Handhabe 48, die drehfest mit dem Reguliereinsatz 34 verbunden ist.

Die zweite Drosselstelle 62 ist wie gehabt als Austrittsöffnung des Fluidkanals zwischen dem Betätigungsmodul 50 und dem Mengenreguliermodul 30 gebildet. Dabei wird die Größe der Durchflussöffnung der zweiten Drosselstelle 62 über einen zwischen der Dichtung 55 des Betätigungsmoduls 50 und dem zugleich als Ventilsitz dienenden Reguliereinsatz 34 des Mengenreguliermoduls 30 gebildet. Eine Längsverschiebung des Ventilstifts 52 bewirkt insofern wie gehabt eine Veränderung der Größe der Durchflussöffnung der zweiten Drosselstelle 62.

Die dritte Drosselstelle 60, die dem Abbau von Druckschwankungen dient, ist zwischen einer Innenseite des Reguliereinsatzes 34 einerseits und einem oberen, freien Randabschnitt des Topfrands 41 gebildet. Der Reguliertopf 40 ist auf einer dem Boden 71 des Durchflusstopfs 70 zugewandten Seite mit dem Druck p₁ und andererseits mit dem Druck p₃ beaufschlagt. Die Druckdifferenz bewirkt zusammen mit der seitens der Regulierfeder 43 bereitgestellten Federkraft eine Längsverschiebung des Reguliertopfs 40 in die Längsbetätigungsrichtung 4, wobei sich eine Größe der Durchflussöffnung der dritten Drosselstelle 60 ändert. Im Boden 71 des Durchflusstopfs 70 ist koaxial zur Längsmittelachse 8 die Ausnehmung 75 vorgesehen, über die das Arbeitsmedium in den Durchflusstopf 70 gelangt, sodass der Druck p₁ auf den Topfboden 42 des Reguliertopfs 40 wirkt.

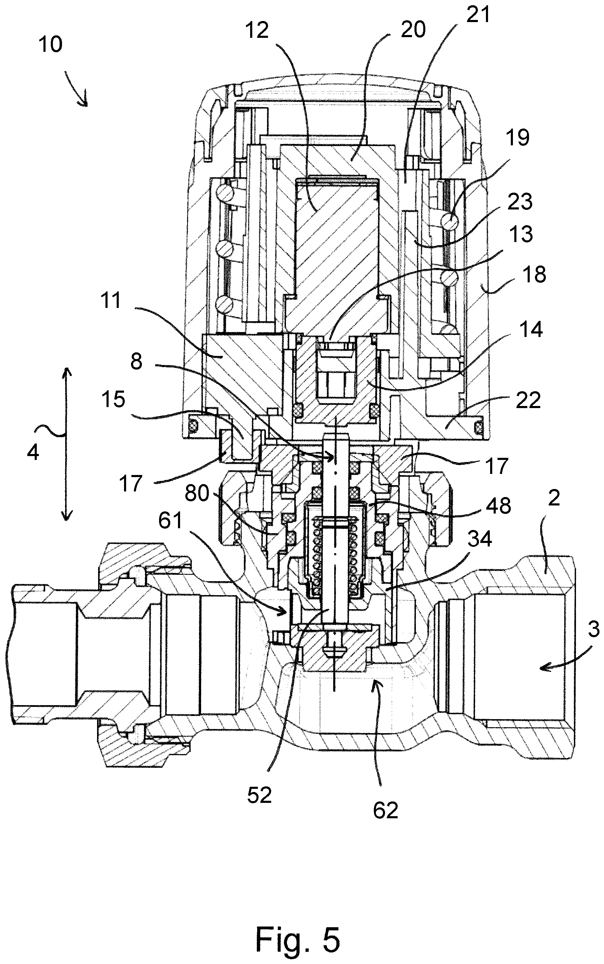

Eine erfindungsgemäße Regulierventilanordnung gemäß einem dritten Ausführungsbeispiel ist in Figur 5 dargestellt. Die Regulierventilanordnung umfasst die in bekannter Weise ausgeführte Stellantriebseinheit 10 und ein Regulierventil, an dem eine erste Drosselstelle 61 und eine zweite Drosselstelle 62 ausgebildet sind. Wie gehabt sind die Größen der Durchflussöffnungen der Drosselstellen 61, 62 voreinstellbar über die Aktuatoren 11, 12 der Stellantriebseinheit 10.

Das Regulierventil ist so aufgebaut, dass das Betätigungsmodul und das Mengenreguliermodul räumlich und funktional integriert sind. Insofern umgreift der um die Längsmittelachse 8 drehbare Reguliereinsatz 34 den in die Längsbetätigungsrichtung 4 verschiebbaren Ventilstift 52. Wie gehabt kann über den Ventilstift 52 die Größe der zweiten Drosselstelle 62 und über den Reguliereinsatz 34 die Größe der ersten Drosselstelle 61 eingestellt werden.

Die erste Drosselstelle 61 ist über die Handhabe 48 drehbar. Abhängig von einer Drehstellung des Reguliereinsatzes 34 ist eine in einem gemeinsamen Gehäusemodul 80 des Regulierventils seitlich gebildete Durchflussöffnung vollständig freigegeben oder zumindest teilweise verschlossen. Über die Handhabe 48, die in bekannter Weise mit dem Elektromotor 11 zusammenwirkt, kann die Durchflussmenge durch die erste Drosselstelle 61 voreingestellt beziehungsweise geändert werden. Der Ventilstift 52 mit dem Ventilteller 54 und der Dichtung 55 dient demgegenüber vorliegend dazu, den Durchfluss durch das Regulierventil zu sperren.

In den vorstehend diskutierten Ausführungsbeispielen der Erfindung verstehen sich die Realisierungsformen des ersten Aktuators als Elektromotor 11 und des zweiten Aktuators als elektrothermisches Betätigungselement 12 lediglich exemplarisch. Es können andere Aktuatoren als die gezeigten verwendet werden zur Voreinstellung der Größe der ersten Drosselstelle 61 und der zweiten Drosselstelle 62.

Gleiche Bauteile und Bauteilfunktionen sind durch gleiche Bezugszeichen gekennzeichnet.

## Patentansprüche

1. Regulierventilanordnung für eine Heiz- und/oder Kühlanlage umfassend ein Regulierventil mit einem Zulaufstutzen (2) und umfassend eine an das Regulierventil angebaute Stellantriebseinheit (10), wobei das Regulierventil einen sich von einer an dem Zulaufstutzen (2) vorgesehenen Zulauföffnung (3) bis zu einer Austrittöffnung erstreckenden Fluidkanal für ein Arbeitsmedium bereitstellt und wobei an dem Fluidkanal eine erste Durchflussöffnung mit einer einstellbaren Größe als eine erste Drosselstelle (61) für das Arbeitsmedium und eine zweite Durchflussöffnung mit einer einstellbaren Größe als eine zweite Drosselstelle (62) für das Arbeitsmedium vorgesehen sind, **dadurch gekennzeichnet, dass** die Stellantriebseinheit (10) als eine doppelwirkende Stellantriebseinheit (10) ausgebildet ist und ein gemeinsames Antriebsgehäuse sowie einen in dem gemeinsamen Antriebsgehäuse angeordneten ersten Aktuator und einen in dem gemeinsamen Antriebsgehäuse angeordneten zweiten Aktuator vorsieht, wobei der erste Aktuator mit dem Regulierventil wirkverbunden ist zur Einstellung der Größe der ersten Durchflussöffnung und wobei der zweite Aktuator mit dem Regulierventil wirkverbunden ist zur Einstellung der Größe der zweiten Durchflussöffnung.

2. Regulierventilanordnung nach Anspruch 1, **dadurch gekennzeichnet, dass** das Regulierventil ein Betätigungsmodul (50) umfasst, wobei das Betätigungsmodul (50) einen in eine Längsbetätigungsrichtung (4) verschiebbaren Ventilstift (52) und einen an einem Zulauföffnung (3) zugewandten Ende des Ventilstifts (52) gehaltenen Teller (54) sowie eine an dem Teller (54) angeordnete Dichtung (55) vorsieht und in Abhängigkeit einer Längsposition des Ventilstifts (52) die Größe der zweiten Durchflussöffnung bestimmt ist.

3. Regulierventilanordnung nach Anspruch 1 oder 2, **dadurch gekennzeichnet, dass** als erster Aktuator ein rotatorisch wirksamer Antrieb und bevorzugt ein Elektromotor (11) mit einer Antriebswelle (15) vorgesehen ist und gegebenenfalls dass die Antriebswelle (15) parallel zu dem Ventilstift (52) und/oder in die Längsbetätigungsrichtung (4) orientiert angeordnet ist.

4. Regulierventilanordnung nach einem der Ansprüche 1 bis 3, **dadurch gekennzeichnet, dass** der erste Aktuator über einen Wandler mit einer bevorzugt rotatorisch betätigbare Handhabe (48) des Regulierventils wirkverbunden ist zur Änderung der Voreinstellung der Größe der ersten Durchflussöffnung.

5. Regulierventilanordnung nach Anspruch 4, **dadurch gekennzeichnet, dass** ein Zahnradgetriebe als Wandler vorgesehen ist, wobei das Zahnradgetriebe bevorzugt ein an der Antriebswelle (15) des Elektromotors (11) festgelegtes Ritzel (16) und/oder ein die Handhabe (48) umgreifendes Zahnrad (17) vorsieht.

6. Regulierventilanordnung nach einem der Ansprüche 1 bis 5, **dadurch gekennzeichnet, dass** als zweiter Aktuator ein Linearantrieb und bevorzugt ein Lineardirektantrieb vorgesehen ist und/oder dass der zweite Aktuator ein längsbewegbares Übertragungselement (13) vorsieht.

7. Regulierventilanordnung nach einem der Ansprüche 1 bis 6, **dadurch gekennzeichnet, dass** als zweiter Aktuator ein elektrothermisches Betätigungselement (12) vorgesehen ist.

8. Regulierventilanordnung nach einem der Ansprüche 1 bis 7, **dadurch gekennzeichnet, dass** der zweite Aktuator und/oder das längsbewegliche Übertragungselement (13) dem Ventilstift (52) koaxial und/oder auf einer Zulauföffnung (3) abgewandten Seite zugeordnet ist und/oder dass das Übertragungselement (13) in die Längsbetätigungsrichtung (4) längsbewegbar ist.

9. Regulierventilanordnung nach Anspruch 4 oder 5, **dadurch gekennzeichnet, dass** das Regulierventil ein Mengenreguliermodul (30) vorsieht, wobei das Mengenreguliermodul (30) ein Reguliergehäuse und einen in dem Reguliergehäuse beweglich angeordneten Reguliereinsatz (34) sowie die Handhabe (48) umfasst und wobei die Handhabe (48) mit dem Reguliereinsatz (34) des Mengenreguliermoduls (30) zusammenwirkt zur Änderung und/oder Voreinstellung der Größe der ersten Durchflussöffnung in Abhängigkeit einer Position des Reguliereinsatzes (34).

10. Regulierventilanordnung nach Anspruch 9, **dadurch gekennzeichnet, dass** das Mengenreguliermodul (30) einen über eine Regulierfeder (43) des Mengenreguliermoduls (30) gegen den Reguliereinsatz (34) abgestützten und relativ zu dem Reguliereinsatz (34) längsverschiebbaren Reguliertopf (40) mit einem der Zulauföffnung (3) zugewandten, geschlossenen Topfboden (42) und einem von dem Topfboden (42) abragenden Topfrand (41) vorsieht, wobei zwischen dem Topfrand (41) und einer dem Topfrand zugewandten Innenmantelfläche (33) des Reguliergehäuses eine dritte Durchflussöffnung variabler Größe als dritte Drosselstelle (60) gebildet ist.

11. Regulierventilanordnung nach Anspruch 9 oder 10, **dadurch gekennzeichnet, dass** der Reguliereinsatz (34) des Mengenreguliermoduls (30) in die Längsbetätigungsrichtung (4) längsverschiebbar und/oder um die Längsbetätigungsrichtung (4) drehbar in dem Reguliergehäuse des Mengenreguliermoduls (30) angeordnet ist.

12. Regulierventilanordnung nach einem der Ansprüche 1 bis 11, **dadurch gekennzeichnet, dass** das Antriebsgehäuse mehrteilig und/oder becherförmig ausgebildet ist und/oder dass die Stellantriebseinheit (10) eine Andrückfeder (19) vorsieht, welche zum Andrücken des zweiten Aktuators gegen den Ventilstift (52) vorgespannt zwischen dem Antriebsgehäuse einerseits und dem zweiten Aktuator anderseits angeordnet ist.

13. Regulierventilanordnung nach einem der Ansprüche 1 bis 12, **dadurch gekennzeichnet, dass** die erste Durchflussöffnung und/oder die zweite Durchflussöffnung und/oder die dritte Durchflussöffnung als Ringspalt und/oder ringsegmentförmig und/oder durch eine Mehrzahl von Ringsegmenten gebildet sind und/oder dass die erste Durchflussöffnung und/oder die zweite Durchflussöffnung und/oder die dritte Durchflussöffnung koaxial zueinander und/oder zu einer Längsmittelachse (8) des Regulierventils angeordnet sind.

14. Regulierventilanordnung nach einem der Ansprüche 9 bis 11, **dadurch gekennzeichnet, dass** die zweite Drosselstelle (62) zwischen der Dichtung (55) des Betätigungsmoduls (50) und dem Mengenreguliermodul (30) gebildet ist und/oder dass bezogen auf eine Durchflussrichtung des Arbeitsmediums die zweite Drosselstelle (62) hinter der ersten Drosselstelle (61) und/oder die dritte Drosselstelle (60) vor der ersten Drosselstelle (61) gebildet ist.

15. Regulierventilanordnung nach einem der Ansprüche 1 bis 14, **dadurch gekennzeichnet, dass** Anbaumittel vorgesehen sind, welche eingerichtet sind zum Anbau der Stellantriebseinheit (10) an das Regulierventil.

## Claims

1. A control valve assembly for a heating and/or cooling system comprising a control valve with an inlet pipe (2) and comprising an actuation drive unit (10) installed on the control valve, wherein the control valve provides a fluid channel for a working medium extending from an inlet opening (3) provided at the inlet pipe (2) to an outlet opening, and wherein a first flow opening having an adjustable size as a first throttle point (61) for the working medium and a second flow opening having an adjustable size as a second throttle point (62) for the working medium are provided at the fluid channel, **characterised in that** the actuation drive unit (10) is configured as a double-acting actuation drive unit (10) and provides a common drive housing as well as a first actuator arranged in the common drive housing and a second actuator arranged in the common drive housing, wherein the first actuator is operatively connected to the control valve for adjusting the size of the first flow opening, and wherein the second actuator is operatively connected to the control valve for adjusting the size of the second flow opening.

2. The control valve assembly according to claim 1, **characterised in that** the control valve comprises an actuating module (50), wherein the actuating module (50) comprises a valve pin (52) displaceable in a longitudinal actuating direction (4), and a disc (54) held at an end of the valve pin (52) facing the inlet opening (3), as well as a seal (55) arranged on the disc (54), and the size of the second flow opening is determined as a function of a longitudinal position of the valve pin (52).

3. The control valve assembly according to claim 1 or 2, **characterised in that** a rotationally active drive and preferably an electric motor (11) with a drive shaft (15) is provided as the first actuator and, as appropriate, **in that** the drive shaft (15) is arranged parallel to the valve pin (52) and/or orientated in the longitudinal actuating direction (4).

4. The control valve assembly according to any of claims 1 to 3, **characterised in that** the first actuator is operatively connected via a converter to a preferably rotationally actuatable handle (48) of the control valve for changing the presetting of the size of the first flow opening.

5. The control valve assembly according to claim 4, **characterised in that** a gear train is provided as a converter, wherein the gear train preferably provides a pinion (16) fixed to the drive shaft (15) of the electric motor (11) and/or a gear (17) surrounding the handle (48).

6. The control valve assembly according to any of claims 1 to 5, **characterised in that** a linear drive and preferably a linear direct drive is provided as the second actuator, and/or **in that** the second actuator provides a longitudinally movable transmission element (13).

7. The control valve assembly according to any of claims 1 to 6, **characterised in that** an electrothermal actuating element (12) is provided as the second actuator.

8. The control valve assembly according to any of claims 1 to 7, **characterised in that** the second actuator and/or the longitudinally movable transmission element (13) are associated with the valve pin (52) coaxially and/or on a side facing away from the inlet opening (3), and/or **in that** the transmission element (13) is longitudinally movable in the longitudinal actuating direction (4).

9. The control valve assembly according to claim 4 or 5, **characterised in that** the control valve provides a quantity control module (30), wherein the quantity control module (30) comprises a control housing and a control insert (34) movably arranged in the control housing, as well as the handle (48), and wherein the handle (48) cooperates with the control insert (34) of the quantity control module (30) for changing and/or presetting the size of the first flow opening as a function of a position of the control insert (34).

10. The control valve assembly according to claim 9, **characterised in that** the quantity control module (30) provides a control pot (40) supported against the control insert (34) via a control spring (43) of the quantity control module (30) and longitudinally displaceable relative to the control insert (34) having a closed pot bottom (42) facing the inlet opening (3) and a pot edge (41) projecting from the pot bottom (42), wherein a third flow opening of variable size is formed as a third throttle point (60) between the pot edge (41) and an inner shell surface (33) of the control housing facing the pot edge.

11. The control valve assembly according to claim 9 or 10, **characterised in that** the control insert (34) of the quantity control module (30) is arranged in the control housing of the quantity control module (30) to be longitudinally displaceable in the longitudinal actuating direction (4) and/or rotatable about the longitudinal actuating direction (4).

12. The control valve assembly according to any of claims 1 to 11, **characterised in that** the drive housing is configured in several parts and/or cup-shaped, and/or **in that** the actuation drive unit (10) provides a pressure spring (19) which is arranged between the drive housing on the one hand and the second actuator on the other hand in a biased manner for pressing the second actuator against the valve pin (52).

13. The control valve assembly according to any of claims 1 to 12, **characterised in that** the first flow opening and/or the second flow opening and/or the third flow opening are formed as an annular gap and/or in the shape of an annular segment and/or by a plurality of annular segments, and/or **in that** the first flow opening and/or the second flow opening and/or the third flow opening are arranged coaxially with one another and/or with a longitudinal central axis (8) of the control valve.

14. The control valve assembly according to any of claims 9 to 11, **characterised in that** the second throttle point (62) is formed between the seal (55) of the actuating module (50) and the quantity control module (30), and/or **in that**, in relation to a flow direction of the working medium, the second throttle point (62) is formed downstream of the first throttle point (61) and/or the third throttle point (60) is formed upstream of the first throttle point (61).

15. The control valve assembly according to any of claims 1 to 14, **characterised in that** installation means are provided which are adapted for installing the actuation drive unit (10) on the control valve.

## Revendications

1. Agencement de soupape de régulation pour un système de chauffage et/ou de refroidissement comprenant une soupape de régulation avec un raccordement d'entrée (2) et comprenant une unité de servomoteur (10) fixée à la soupape de régulation, dans lequel la soupape de régulation fournit un canal de fluide pour un fluide de travail qui s'étend d'une ouverture d'entrée (3) prévue sur le raccordement d'entrée (2) à une ouverture de sortie, et dans lequel une première ouverture d'écoulement avec une taille réglable est prévue sur le canal de fluide comme premier point d'étranglement (61) pour le fluide de travail et une deuxième ouverture d'écoulement avec une taille réglable est prévue comme deuxième point d'étranglement (62) pour le fluide de travail, **caractérisé en ce que** l'unité de servomoteur (10) est conçue comme une unité de servomoteur (10) à double effet et prévoit un boîtier d'entraînement commun ainsi qu'un premier actionneur disposé dans le boîtier d'entraînement commun et un second actionneur disposé dans le boîtier d'entraînement commun, dans lequel le premier actionneur est fonctionnellement connecté à la soupape de régulation pour ajuster la taille de la première ouverture d'écoulement et dans lequel le second actionneur est fonctionnellement connecté à la soupape de régulation pour ajuster la taille de la deuxième ouverture d'écoulement.

2. Agencement de soupape de régulation selon la revendication 1, **caractérisé en ce que** la soupape de régulation comprend un module d'actionnement (50), dans lequel le module d'actionnement (50) prévoit une tige de soupape (52) qui peut être déplacée dans une direction d'actionnement longitudinale (4) et une plaque (54) maintenue à l'extrémité de la tige de soupape (52) faisant face à une ouverture d'entrée (3), ainsi qu'un joint (55) disposé sur la plaque (54), et la taille de la deuxième ouverture d'écoulement est déterminée en fonction d'une position longitudinale de la tige de soupape (52).

3. Agencement de soupape de régulation selon la revendication 1 ou 2, **caractérisé en ce que** le premier actionneur est un entraînement à effet de rotation et, de préférence, un moteur électrique (11) avec un arbre d'entraînement (15) et, le cas échéant, **en ce que** l'arbre d'entraînement (15) est parallèle à la tige de soupape (52) et/ou est disposé de manière orientée dans la direction d'actionnement longitudinale (4).

4. Agencement de soupape de régulation selon l'une des revendications 1 à 3, **caractérisé en ce que** le premier actionneur est relié fonctionnellement par l'intermédiaire d'un convertisseur à une poignée (48) de préférence actionnable en rotation de la soupape de régulation pour modifier le préréglage de la taille de la première ouverture d'écoulement.

5. Agencement de soupape de régulation selon la revendication 4, **caractérisé en ce qu'**une transmission à engrenages est prévue comme convertisseur, dans lequel la transmission à engrenages prévoit de préférence un pignon (16) fixé à l'arbre d'entraînement (15) du moteur électrique (11) et/ou une roue d'engrenage (17) entourant la poignée (48).

6. Agencement de soupape de régulation selon l'une des revendications 1 à 5, **caractérisé en ce qu'**un entraînement linéaire et de préférence un entraînement linéaire direct est prévu comme second actionneur et/ou **en ce que** le second actionneur prévoit un élément de transmission (13) mobile longitudinalement.

7. Agencement de soupape de régulation selon l'une des revendications 1 à 6, **caractérisé en ce qu'**un élément d'actionnement électrothermique (12) est prévu comme second actionneur.

8. Agencement de soupape de régulation selon l'une des revendications 1 à 7, **caractérisé en ce que** le second actionneur et/ou l'élément de transmission (13) mobile longitudinalement est associé à la tige de soupape (52) coaxialement et/ou sur un côté opposé à une ouverture d'entrée (3) et/ou **en ce que** l'élément de transmission (13) peut être déplacé longitudinalement dans la direction d'actionnement longitudinale (4).

9. Agencement de soupape de régulation selon la revendication 4 ou 5, **caractérisé en ce que** la soupape de régulation prévoit un module de régulation de quantité (30), dans lequel le module de régulation de quantité (30) comprend un boîtier de régulation et un insert de régulation (34) disposé de manière mobile dans le boîtier de régulation ainsi que la poignée (48) et dans lequel la poignée (48) coopère avec l'insert de régulation (34) du module de régulation de quantité (30) pour modifier et/ou prédéfinir la taille de la première ouverture d'écoulement en fonction d'une position de l'insert de régulation (34).

10. Agencement de soupape de régulation selon la revendication 9, **caractérisé en ce que** le module de régulation de quantité (30) prévoit un pot de régulation (40) prenant appui contre l'insert de régulation (34) par l'intermédiaire d'un ressort de régulation (43) du module de régulation de quantité (30) et qui peut être déplacé longitudinalement par rapport à l'insert de régulation (34) avec un fond de pot fermé (42) faisant face à l'ouverture d'entrée (3) et un bord de pot (41) dépassant du fond de pot (42), dans lequel une troisième ouverture d'écoulement de taille variable est formée en tant que troisième point d'étranglement (60) entre le bord du pot (41) et une surface interne (33) du boîtier de régulation faisant face au bord du pot.

11. Agencement de soupape de régulation selon la revendication 9 ou 10, **caractérisé en ce que** l'insert de régulation (34) du module de régulation de quantité (30) est disposé dans le boîtier de régulation du module de régulation de quantité (30) de manière à pouvoir être déplacé longitudinalement dans la direction d'actionnement longitudinale (4) et/ou de façon rotative autour de la direction d'actionnement longitudinale (4).

12. Agencement de soupape de régulation selon l'une des revendications 1 à 11, **caractérisé en ce que** le boîtier d'entraînement est réalisé en plusieurs parties et/ou en forme de coupelle et/ou **en ce que** l'unité de servomoteur (10) prévoit un ressort de pression (19) qui est disposé en précontrainte entre le boîtier d'entraînement d'une part et le second actionneur d'autre part afin de presser le second actionneur contre la tige de soupape (52).

13. Agencement de soupape de régulation selon l'une des revendications 1 à 12, **caractérisé en ce que** la première ouverture d'écoulement et/ou la deuxième ouverture d'écoulement et/ou la troisième ouverture d'écoulement sont formées sous la forme d'un espace annulaire et/ou en forme de segment annulaire et/ou par une pluralité de segments annulaires et/ou **en ce que** la première ouverture d'écoulement et/ou la deuxième ouverture d'écoulement et/ou la troisième ouverture d'écoulement sont disposées coaxialement l'une par rapport à l'autre et/ou à un axe central longitudinal (8) de la soupape de régulation.

14. Agencement de soupape de régulation selon l'une des revendications 9 à 11, **caractérisé en ce que** le deuxième point d'étranglement (62) est formé entre le joint (55) du module d'actionnement (50) et le module de régulation de quantité (30) et/ou **en ce que**, sur la base d'une direction d'écoulement du fluide de travail, le deuxième point d'étranglement (62) est formé derrière le premier point d'étranglement (61) et/ou le troisième point d'étranglement (60) est formé devant le premier point d'étranglement (61).

15. Agencement de soupape de régulation selon l'une des revendications 1 à 14, **caractérisé en ce que** des moyens de fixation sont prévus pour fixer l'unité de servomoteur (10) à la soupape de régulation.
